# EUROPEAN PATENT SPECIFICATION

(11) **EP 2 996 435 B1**
(45) Date of publication and mention of the grant of the patent: **17.01.2018**
(21) Application number: 14795480.4
(22) Date of filing: 08.04.2014
(51) Int. Cl.: H04W 28/08, H04W 72/08, H04W 88/06

(54) **USER DEVICE AND RADIO BASE STATION**
BENUTZERGERÄT UND FUNKBASISSTATION
DISPOSITIF D'UTILISATEUR, ET STATION DE BASE RADIO

(30) Priority: 10.05.2013 JP 2013100399
(43) Date of publication of application: 16.03.2016
(73) Proprietor: NTT DOCOMO, INC., Chiyoda-ku Tokyo 100-6150 (JP)
(72) Inventor: NAGATA, Satoshi, Tokyo 100-6150 (JP); TAKEDA, Kazuaki, Tokyo 100-6150 (JP); ISHII, Hiroyuki, Palo Alto, California 94304 (US)
(74) Representative: Hoffmann Eitle
(86) International application number: PCT/JP2014/060188
(87) International publication number: WO 2014/181627

(56) References cited:
- EP-A2- 1 259 092
- WO-A1-2012/166969
- WO-A1-2014/027495
- WO-A2-2008/085755
- WO-A2-2008/085755
- JP-A- 2012 080 347
- JP-A- 2012 213 219
- JP-A- 2014 060 638
- IAESI ET AL: "Asymmetry-based spectrum utilization and coordination: TDD within FDD", 3GPP DRAFT; R1-131356 (TDD IN FDD), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Chicago, U.S.A.; 20130415 - 20130419 6 April 2013 (2013-04-06), XP050697211, Retrieved from the Internet: URL:http://www.3gpp.org/ftp/tsg_ran/WG1_RL 1/TSGR1_72b/Docs/ [retrieved on 2013-04-06]

## Description

### TECHNICAL FIELD

The present invention relates to a mobile communication technology, and more particularly, to user equipment and a radio base station used in a mobile communication system to improve the network capacity by efficient use of radio resources.

### BACKGROUND ART

Popularization of smartphones and tablets is causing rapid growth in mobile traffic, and increasing the radio network capacity is demanded more strongly than ever. To improve area coverage and capacity of mobile communications networks, small cells such as picocells or femtocells are being introduced. A small cell is a base station or the serving area generally with smaller area size (or coverage) and lower transmit power than a macro cell and designed to support fewer connections than the maximum number of macro cell users.

Installation of small cells is one of promising approaches to accommodate continuously increasing mobile traffic. However, there are several issues to be solved, such as allocation of frequency resources to small cells, interference from macro cells, interference between adjacent small cells, etc.

In order for efficiently accommodating increasing mobile traffic in radio access networks, a technique of unloading intranet traffic making use of user equipment named "advanced UE", which equipment is similar to a cellular device but with advanced performance, is proposed. See, for example, Patent Document 1 listed below. With this unloading technique, data transmission between an advance UE and user equipment is carried out using a device-to-device link (hereinafter, referred to as "D2D link"). Establishment, reconfiguration, handover, or release, of the D2D link is performed based upon a C-plane message supplied from a macro base station to the user equipment and the advanced UE. Advanced UE is connectable with a backhaul link. User equipment can transmit and receive data to and from a server on the network using the backhaul link via the advanced UE. It is also proposed to conduct communication between the user equipment and the advanced UE and communication between the user equipment and the macro base station in a time sharing or time dividing manner using the same frequency resource. It is further proposed to conduct communication between the user equipment and the advanced UE in the time division duplexing (TDD) mode.

Another known technique is to use frequency division duplexing (FDD) uplink resources in a time sharing manner in asymmetric traffic. See, for example, Non-Patent Document 1 listed below.

Patent Document 1: WO 2012/166969

Non Patent Document 1: "Asymmetry-based spectrum utilization and coordination: TDD within FDD", 3GPP TSG-RAN WG1 Meeting #72bis, Chicago, U.S.A., April 15-19, 2013, R1-131356.

### SUMMARY OF THE INVENTION

### TECHNICAL PROBLEM TO BE SOLVED

In general, uplink traffic is lower than downlink traffic in wireless and mobile networks. It is conceived that there may be available uplink resources left, compared with downlink resources.

However, since in a FDD scheme downlink resource (frequency spectrum) and uplink resource (frequency spectrum) are fixed, the uplink resource may not be used efficiently depending on the circumstances. Accordingly, a configuration that enables efficient use of FDD uplink resource is desired.

As has been described above, communication between user equipment and advanced UE is conducted using a D2D link. This means that cell-common pilot signals or broadcast information needed for connection between a base station and user equipment are not required in communication between user equipment and advanced UE. According to this feature, allocation of resources for the D2D link can be adjusted flexibly.

In general, D2D communication is conducted using a TDD scheme. In TDD, the same frequency spectrum is used in time sharing for uplink and downlink. User equipment has a transmitter and a receiver operating at the same frequency. When D2D communication is carried out in the TDD mode, the user equipment can use the same transmitter and the receiver. On the other hand, in FDD, user equipment has a transmitter for the uplink frequency spectrum and a receiver for the downlink frequency spectrum. In this case, when D2D communication is conducted using the uplink frequency spectrum, the user equipment needs to be equipped with an extra receiver operable at the uplink carrier frequency. Similarly, when D2D communication is conducted using the downlink frequency spectrum, then the user equipment needs to be equipped with an extra transmitter operable at the downlink carrier frequency. Because of the necessity for providing an additional transmitter or receiver, conducting D2D communication with a FDD scheme is not preferable.

### MEANS FOR SOLVING THE PROBLEM

In a LTE TDD system, a technique called dynamic TDD enables flexible utilization of uplink and downlink spectra depending on the amount of data transmission.

So, we propose to conduct communication between a small cell and user equipment in a TDD mode making use of a FDD uplink resource (frequency spectrum). This proposal may be restated as that the user equipment communicates with a small cell over a D2D link using a FDD uplink resource (frequency spectrum). With this arrangement, the ratio between the uplink resource and the downlink resource between the user equipment and the small cell can be changed dynamically on the FDD uplink. Consequently, efficient use of radio resources is achieved.

The present invention provides a user equipment as set out in claim 1, a first radio base station as set out in claim 2, and a second radio base station as set out in claim 4.

### ADVANTAGEOUS EFFECT OF THE INVENTION

With the above-described structure, efficient use of radio resources or frequency spectra is achieved and network capacity can be improved.

### BRIEF DESCRIPTION OF THE DRAWINGS

FIG. 1 is a schematic diagram illustrating a mobile communication system according to the embodiment of the invention;
FIG. 2 is a diagram explaining installation of a small cell operating in a TDD mode over an uplink channel of a FDD-mode macro cell;
FIG. 3 illustrates examples of allocation of uplink frequency resources of the macro cell to the small cell operating in the TDD mode;
FIG. 4 is a sequence diagram illustrating the operations of the mobile communication system according to the embodiment;
FIG. 5 illustrates an example of allocation of TDD uplink and downlink at variable ratios provided between the small cell and user equipment;
FIG. 6 is a schematic block diagram of user equipment; FIG. 7 is a schematic block diagram of a macro cell base station;
FIG. 8 is a schematic block diagram of a small cell base station; and
FIG. 9 illustrates an example of TDD-mode communication between user equipment and advanced UE using FDD uplink frequency spectrum of a macro cell.

### EMBODIMENTS TO CARRY OUT THE INVENTION

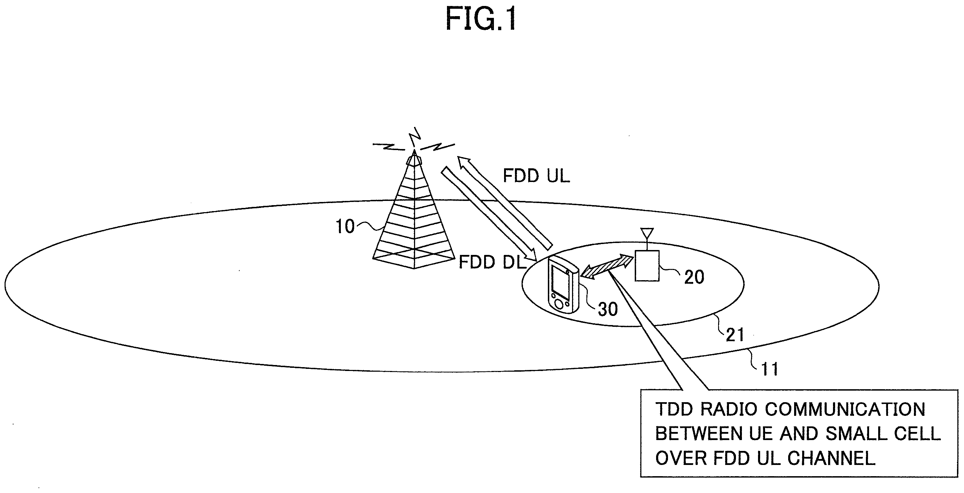

FIG. 1 is a schematic diagram of a mobile communication system 1 according to the embodiment. The mobile communication system 1 includes a macro base station (i.e., the first radio base station) 10 that covers an area 11, a small base station (i.e., the second radio base station) 20 that covers an area 21, and a user equipment 30.

The macro base station 10 is connected to a core network via an access gateway (not illustrated in the figure). Access gateway may be called mobility management entity/serving gateway (MME/SGW). The macro base station 10 employs a frequency division duplexing (FDD) scheme as the communication scheme. Uplink communication from the user equipment 30 to the macro base station 10 (FDD UL) is conducted using a frequency spectrum allocated to the uplink, and downlink communication from the macro base station 10 to the user equipment 30 (FDD DL) is conducted using a frequency spectrum allocated to the downlink.

The small base station 20 operates in a time division duplexing (TDD) mode, and it is connected to a network via backhaul. Although not illustrated in the figure, there are a large number of devices of user equipment device 30 existing in the area 11 of the macro base station 10. If a number of user equipment devices simultaneously communicate with the macro base station 10, high volume of traffic arises and traffic congestion occurs. In such a case, the traffic of the macro cell can be reduced by unloading a part of the traffic to the small cell (load distribution), thereby avoiding undesirable congestion.

In this specification, a "macro cell" may represent a macro base station 10, as well as the geographical area 11 covered by the macro base station 10. Similarly, a "small cell" may represent the small base station 20, as well as the geographical area 21 covered by the small base station 20.

Although in FIG. 1 a single small base station 20 is illustrated, there may be two or more small base stations 20. The small base station 20 communicating with the user equipment 30 is not necessarily located within the area 11 of the macro base station 10, and it may be located outside the area 11. In other words, the small base station 20 may be located in a neighboring cell adjacent to the macro base station 10.

The small base station 20 may be wirelessly connected to the macro base station 10, or it may be connected to the macro base station 10 via a physical cable.

When the traffic of the user equipment 30 is unloaded to the small base station 20, the user equipment 30 communicates with the small base station 20 according to a TDD scheme using an uplink frequency spectrum of the FDD duplexing. Accordingly, the user equipment 30 has an ability to handle both FDD and TDD. This ability will be explained below in more detail.

The TDD communication between the user equipment 30 and the small base station 20 may be conducted using an D2D link. When the traffic of the user equipment 30 is unloaded to the small base station 20, the user equipment 30 communicates with the small base station 20 using the D2D link on the uplink frequency spectrum (channel) of the FDD scheme.

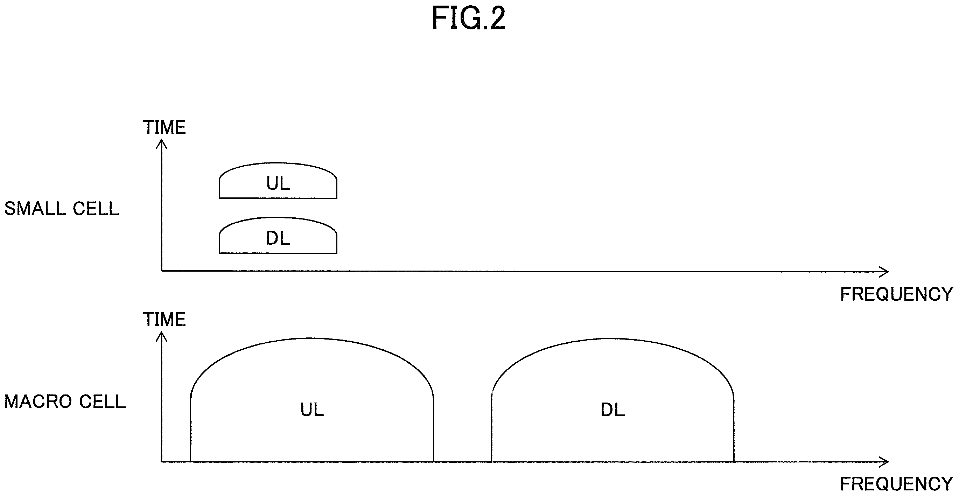

FIG. 2 illustrates a diagram of resource allocation to a small cell operating in the TDD mode at an uplink frequency spectrum of FDD. The horizontal axis represents frequency, and the vertical axis represents time. For the macro cell, an uplink (UL) frequency spectrum and a downlink (DL) frequency spectrum are provided, and carrier frequencies are allocated separately between the uplink and the downlink.

The small base station 20 has a TDD function and it conducts uplink (UL) communication and downlink (DL) communication in a time sharing manner using an uplink (UL) frequency spectrum of the FDD macro cell.

Between the small base station 20 and the user equipment 30, the transmit power levels of both the small base station 20 and the user equipment 30 are set lower. For example, a transmit power 10-decibel (dB) lower than that toward the macro base station 10 is selected.

This arrangement can avoid causing interference due to the communication between the small base station 20 and the user equipment 30 in the FDD uplink communication in the macro cell.

Communication between the small base station 20 and the user equipment 30 in FIG. 1, namely, TDD communication using an FDD uplink frequency spectrum can coexist with direct communication (D2D) between the user equipment 30 and other user equipment, or between the user equipment 30 and advance UE (not illustrated). More detailed explanation will be made later.

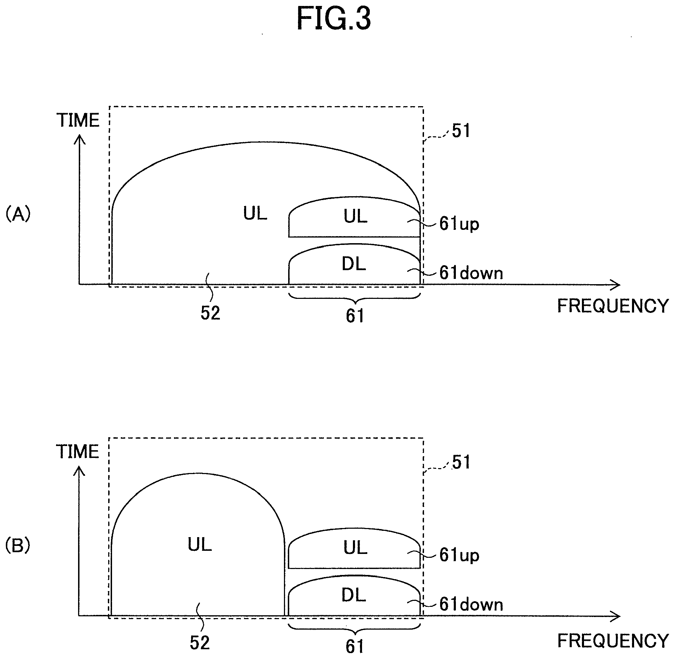

FIG. 3 illustrates examples of resource allocation to the small cell within the FDD uplink frequency spectrum. In configuration (A), the frequency spectrum 51 is provided as an uplink resource for the macro cell. A portion 61 of the frequency spectrum 51 is allocated to communication between the small base station 20 and the user equipment 30. The small base station 20 and the user equipment 30 conduct uplink communication 61ᵤₚ and downlink communication 61_{down} in a time sharing manner at the allocated frequency spectrum 61.

In configuration (A), a carrier frequency used for the uplink communication of the macro cell overlaps with the carrier frequency used for the uplink and downlink communication of the small cell. As long as interference does not become a serious issue, the allocation of configuration (A) is effective. For example, in the case where no other user equipment accessing the macro base station 10 exists near the user equipment 30, serious interference can be avoided. When the user equipment 30 is located very close to the small base station 20 and the transmit power for data transmission between them is low, serious interference can also be avoided. In the latter case, interference can be avoided even if the above-described power control, namely, setting transmit power levels of the small base station 20 and the user equipment 30 lower (e.g., 10-decibel lower) than the transmit power toward the macro base station 10 is not carried out.

Configuration (B) is another example of resource allocation. The frequency spectrum 51 provided for the uplink communication of the macro cell is divided into two portions, the frequency spectrum 52 for the uplink communication of the macro cell (macro base station) 10 and the frequency spectrum 61 for the uplink and downlink communication of the small cell (small base station) 20. The configuration (B) is effective when interference becomes a problem. For example, it is assumed that there is another user equipment transmitting data to the macro base station 10 existing near the user equipment 30 that is communicating with the small base station 20. In
this case, it is effective to separate a carrier frequency used in the small base station 20 operating in the TDD mode from the carrier frequency used by the macro base station 10 for the uplink communication.

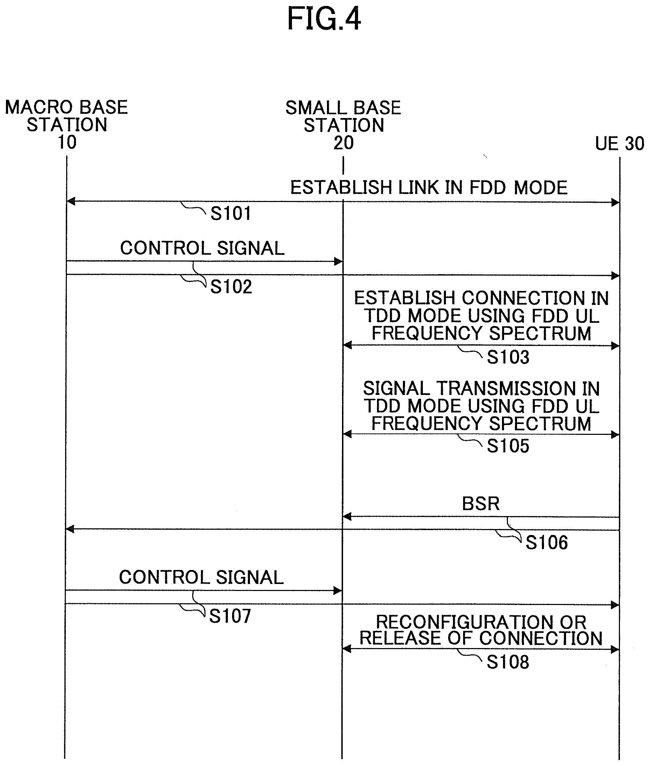

FIG. 4 is a sequence diagram illustrating the operations of the mobile communication system 1 shown in FIG. 1. First, traffic data for the user equipment 30 is generated and a FDD link is established between the macro base station 10 and the user equipment 30 (S101). When the generated data is user data produced in the user equipment 30, establishment of the FDD link may be started by a random access procedure from the user equipment 30. When the generated data is downlink data addressed to the user equipment 30, establishment of the FDD link may be started by transmission of a paging message from the macro base station 10.

To unload a part or all of the traffic between the macro base station 10 and the user equipment 30, the macro base station 10 transmits a control signal to the small base station 20 and/or the user equipment 30 (S102). Necessity for unloading the traffic to the small base station 20 may be determined by the macro base station 10 based upon the amount of buffered data in the user equipment 30, the direction of change in the amount of buffered data in the user equipment 10, the traffic environment in the macro cell, the radio environment, or the other factors. Alternatively, unloading of the traffic may be instructed by upper layer signaling.

In the case where the macro base station 10 has centralized control over connectivity between the user equipment 30 and the small base station 20, a control signal instructing the user equipment 30 to establish connection to the small base station 20 may be transmitted only to the user equipment 30 from the macro base station 10. Alternatively, a control signal instructing the small base station 20 to establish connection with the user equipment 30 may be transmitted only to the small base station 20 from the macro base station 10. In the latter case, the macro base station 10 may negotiate with multiple small base stations 20 and it may configure a negotiated one of the small base stations 20 as a secondary cell. The interface between the macro base station 10 and the small base station 20 may be an existing X2 interface, or a new interface may be defined. As still another alternative, a selected small base station 20 and the user equipment 30 may start a connection procedure upon receiving the control signals from the macro base station 10 as a trigger event, without negotiation. The control signal may contain information about available carrier frequencies within the uplink frequency spectrum of the macro base station 10 or the synchronization signal sequence of the small base station 20.

Next, the small base station 20 and the user equipment 30 establish connection or a radio link at the FDD uplink frequency spectrum according to the TDD scheme (S103). The link established by the TDD scheme may be a D2D link, which will be described later in more detail. The connection procedure may be started by the user equipment 30 by detecting a pilot signal transmitted by the small base station 20 for radio access to the small base station 20. Or the user equipment 30 may start the connection procedure by transmitting a random access preamble to the small base station 20 upon reception of the control signal from the macro base station 10 as a trigger event.

Because at the beginning of the establishment of the connection, the small base station 20 does not know the amount of uplink resources to be allocated to the user equipment 30, the user equipment 30 may transmit a buffer status report to the small base station 20 when first accessing the small base station 20 or when transmitting a random access preamble. Upon establishment of the link, a connection complete message may be transmitted from the user equipment 30 or the small base station 20 to the macro base station 10.

Upon establishment of the TDD link, at least a part of the traffic of the user equipment 30 is unloaded to the small base station 20, and data transmission/reception is conducted between the small base station 20 and the user equipment 30 according to the TDD scheme (S105). During the data transmission, the user equipment 30 transmits buffer status reports (BSRs) to the small base station 20 and/or the macro base station 10 (S106). When the buffer status report of the user equipment 30 is transmitted only to the small base station 20, the buffer status report may be transferred from the small base station 20 to the macro base station 10. Alternatively, the macro base station 10 may control allocation of time slots for communication between the small base station 20 and the user equipment 30.

The macro base station 10 monitors the amount of buffered data in the user equipment 30, and it controls reconfiguration or ending of the unloading of the traffic to the small base station 20. Reconfiguration or ending of unloading is, for example, switching the traffic of the user equipment 30 to another small base station or getting the traffic of the user equipment 30 back to the macro base station 10.

Upon determination of reconfiguration or ending (or release) of the connection between the small base station 20 and the user equipment 30, the macro base station 10 transmits a control signal indicating the reconfiguration or ending of the traffic unloaded to the small base station 20 and the user equipment 30 (S107). Upon reception of the control signal, the connection or the link between the user equipment 30 and the small base station 20 is released (S108).

With this method, the FDD uplink frequency resources of the macro cell can be used efficiently and the load on the macro cell can be distributed.

Which part of the frequency resource of the FDD uplink frequency spectrum of the macro cell be allocated to the TDD link of the small base station 20 may be determined by the macro base station 10 by measuring interference at the macro base station 10, or it may be instructed by upper layer signaling. In response to the interference measurement result, configuration of resource allocation may be switched between configuration (A) and configuration (B) illustrated in FIG. 3. With configuration (A), carrier frequencies used by the macro cell and the small cell overlap each other in the FDD uplink frequency spectrum. With configuration (B), carrier frequencies used by the macro cell and the small cell are separated from each other within the FDD uplink frequency spectrum.

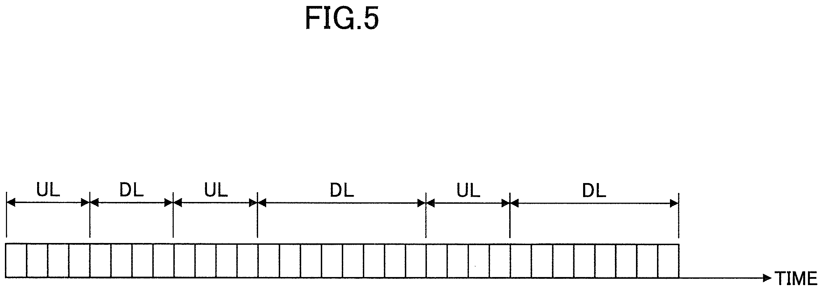

FIG. 5 illustrates an example of allocation of time resources for communication between the small base station 20 and the user equipment 30. TDD allows asymmetric resource allocation between uplink and downlink. Especially with a technique of dynamic variable TDD, the ratio of transmission rate between the uplink and downlink can be variably controlled depending on the amount of data.

For example, the number of time slots allocated to uplink and the number of time slots allocated to downlink may differ from each other, as illustrated in FIG. 5. In this manner, the ratio between transmission and receiving can be varied in time sharing manner in an existing FDD system, depending on the volumes of uplink and downlink traffic between the small base station 20 and the user equipment 30. Consequently, the efficient use of radio resources is achieved.

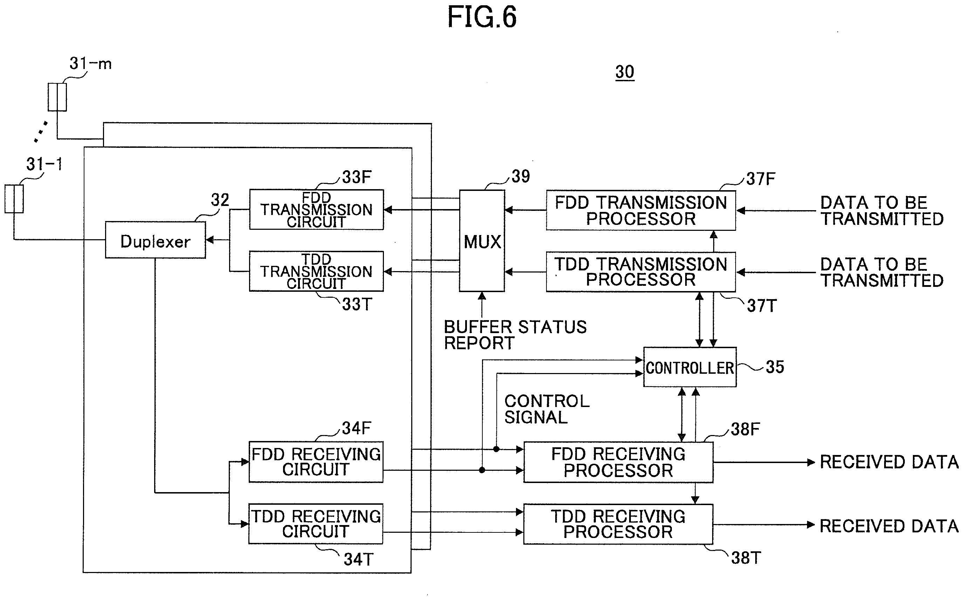

FIG. 6 is a schematic block diagram of the user equipment 30. The user equipment 30 has multiple antennas 31-1 to 31-m. Corresponding to each of the antennas 31-1 to 31-m, a duplexer 32, s FDD transmission circuit 33F, a TDD transmission circuit 33T, a FDD receiving circuit 34F, and a TDD receiving circuit 34T are provided.

The output of the FDD receiving circuit 34F is connected to the input of a FDD receiving processor 38F. The output of the TDD receiving circuit 34T is connected to the input of a TDD receiving processor 38T. The user equipment 30 also has a FDD transmission processor 37F and a TDD transmission processor 37T. The output of the FDD transmission processor 37F is connected via a multiplexer (MUX) 39 to the input of the FDD transmission circuit 33F.

The FDD transmission circuit 33F, the FDD receiving circuit 34F, the FDD transmission processor 37F and the FDD receiving processor 38F comprise a FDD communication device (which may be referred to as the first communication device). The TDD transmission circuit 33T, the TDD receiving circuit 34T, the TDD transmission processor 37T and the TDD receiving processor 38T comprise a TDD communication device (which may be referred to as the second communication device).

The FDD transmission processor 37F, the TDD transmission processor 37T, the FDD receiving processor 38F and the TDD receiving processor 38T are connected to a controller 35.

A control signal transmitted from the macro base station 10 is received at each of the antennas 31-1 to 31-m and supplied to the controller 35 via the associated duplexer 32 and the FDD receiving circuit 34F. The controller 35 performs establishment, reconfiguration, or release of a link (or connection) between the user equipment 30 and the small base station 20 according to the control signal.

Upon receiving a control signal instructing unloading of traffic of the user equipment 30 to the small base station 20, the controller 30 causes the TDD transmission processor 37T and the TDD receiving processor 38T to operate. Then, communication with the small base station 20 is performed in a time sharing manner between uplink and downlink (according to the TDD scheme), using a FDD uplink frequency spectrum of the macro cell.

Data to be transmitted from the user equipment 30 to the small base station 20 are subjected to serial-to-parallel conversion, channel coding, data modulation, etc., in the TDD transmission processor 37T, and multiplexed with a buffer status report at the multiplexer 39. The multiplexed signal is transmitted from each of the antennas 31-1 to 31-m via the associated TDD transmission circuit 33T and the duplexer 32.

On the other hand, during communication with the macro base station 10, the controller 35 of the user equipment 30 causes the FDD transmission processor 37F and the FDD receiving processor 38F to operate according to the FDD scheme.

Data to be transmitted to the macro base station 10 are subjected to serial-to-parallel conversion, channel coding, data modulation, etc., in the FDD transmission processor 37F, and multiplexed with a buffer status report at the multiplexer 39. The multiplexed signal is transmitted from each of the antennas 31-1 to 31-m via the associated FDD transmission circuit 33F and the duplexer 32.

In the TDD mode, namely, during communication with the small base station 20, it is preferable for the user equipment 30 to transmit the buffer status report to both the small base station 20 and the macro base station 10. This arrangement allows the macro base station 10 to provide control over reconfiguration or release of the link between the small base station 20 and the user equipment 30 based upon the buffer status report from the user equipment 30.

The user equipment 30 receives a control signal instructing reconfiguration or release of the connection with the small base station 20 from the macro base station 10. Then, the controller 35 causes the TDD transmission processor 37T, the FDD transmission processor 37F, the TDD receiving processor 38F and the FDD receiving processor 38F to operate to reconfigure or release the link between the currently connected small base station 20.

By furnishing the user equipment 30 with the ability of communicating in both the FDD mode and the TDD mode, the user equipment 30 can be connected to the small base station 20 and data are transmitted and received in a TDD mode using a FDD uplink frequency spectrum. Although in FIG. 6 the user equipment 30 has multiple antennas, the same function and the effect can be achieved with a single antenna structure.

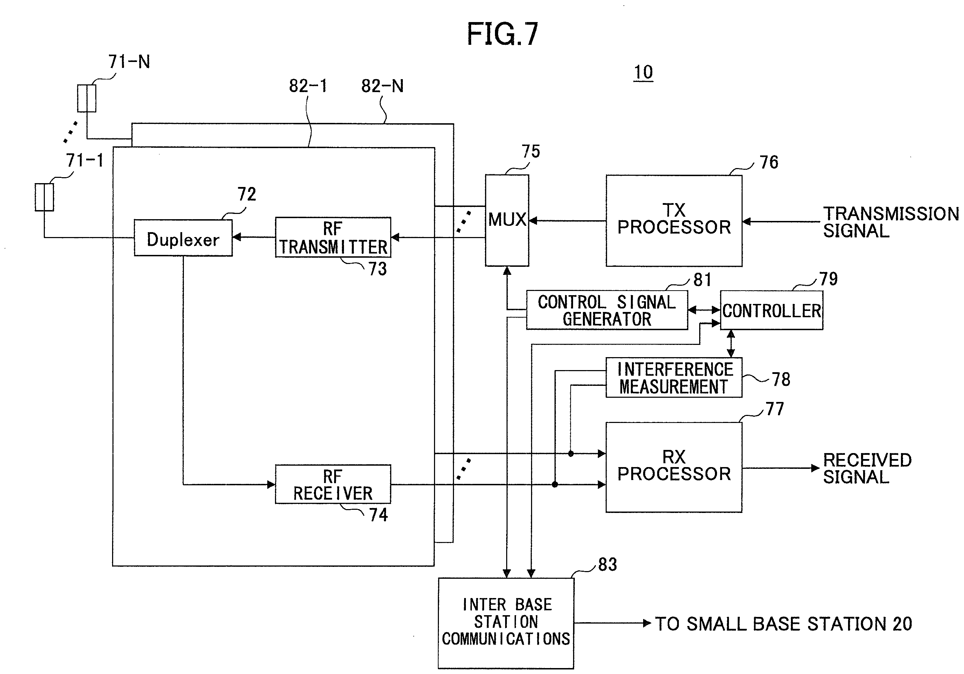

FIG. 7 is a schematic block diagram of the macro base station 10. The macro base station 10 has multiple antennas 71-1 to 71-N, RF transceivers 82-1 to 82-N (which may be referred to collectively as "RF transceiver(s) 82") provided corresponding to the antennas 71-1 to 71-N, and an inter-base station communication unit 83. The RF transceiver 82 has a duplexer 72, a RF transmitter 73, and a RF receiver 74. The macro base station 10 also has a transmission processor 76, an interference measurement unit 78, a controller 79, a control signal generator 81, and a multiplexer (MUX) 75.

The macro base station 10 receives a buffer status report transmitted from the user equipment, via the duplexer 72 and the RF receiver 74. The interference measurement unit 78 measures the interference level of the received signal. The controller 79 determines whether to unload the traffic of the use equipment 80 to the small base station 20, based upon the buffer status report, the measurement result of the interference, other traffic conditions, the radio environment, etc. Upon determination of the traffic unloading to the small base station 20, the control signal generator 20 generates a control signal.

The controller 79 also determines a carrier frequency to be allocated to the small base station from the FDD uplink frequency spectrum based upon the interference level. When the interference level of the user equipment 30 is low, a carrier frequency overlapping the carrier frequencies used by the macro base station 10 can be allocated to the user equipment 30 within the FDD uplink spectrum, as is the configuration (A) of FIG. 3. When the interference level of the user equipment 30 is high, a carrier frequency not overlapping the carrier frequencies used by the macro base station 10 can be allocated to the user equipment 30 within the FDD uplink spectrum, as is the configuration (B) of FIG. 3.

Based upon the buffer status information, the interference level, or other factors, the controller 79 controls reconfiguration and/or release of the link between the small base station 20 and the user equipment 30. The controller 79 instructs the control signal generator 81 to generate a control signal to be supplied to the user equipment 30 and/or the small base station 20. For example, when the amount of buffered data in the user equipment 30 becomes small, a control signal instructing termination of the unloading and return of the user traffic back to the macro base station 10 may be generated. When the amount of buffered data in the user equipment 30 is still large, but there is another small base station with less traffic near the user equipment 30, then a control signal instructing reconfiguration of the unloading to this other small base station may be generated.

A control signal to the user equipment 30 is multiplexed with a transmit data signal at the multiplexer (MUX) 75. The transmit data signal has been subjected to serial to parallel conversion, channel coding and data modulation in the transmission processor 76. The multiplexed signal is transmitted from the antenna 71-a to 7-N via the associated RF transmitter 73 and the duplexer 72. The macro base station 10 is connected to the small base station 20 wirelessly or with a physical cable. A control signal to the small base station 20 may be transmitted to the small base station 20 via an inter-base station communication unit 83.

Thus, the macro base station 10 can control starting, reconfiguration or ending of unloading of user traffic to the small base station 20 in response to the buffer status report from the user equipment 30, the interference level, or other factors.

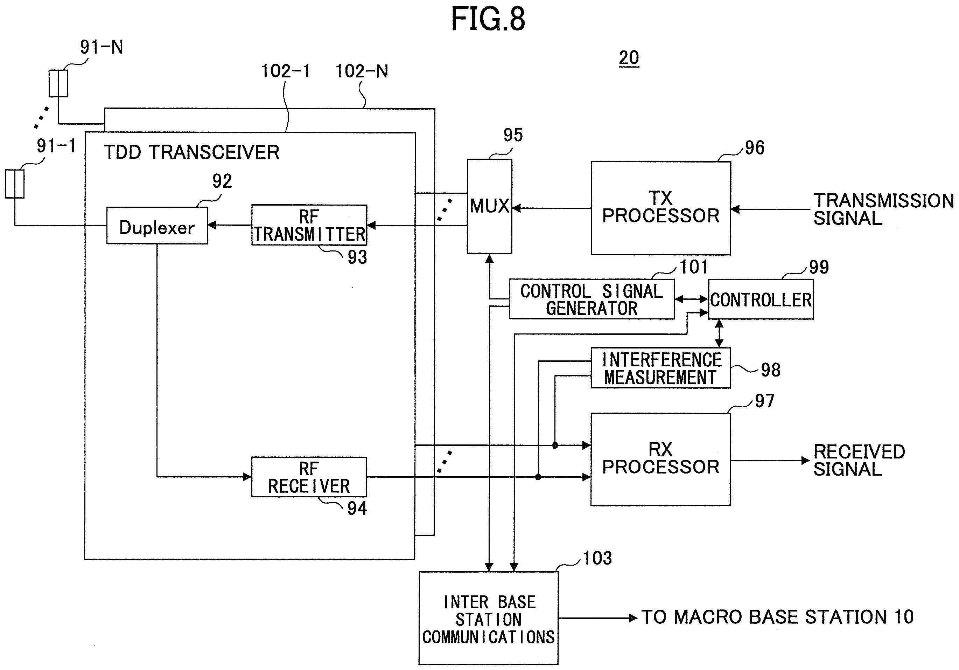

FIG. 8 is a schematic block diagram of the small base station 20. The small base station 20 has multiple antennas 91-1 to 91-N, TDD transceivers 102-1 to 102-N (which may be referred to collectively as "TDD transceiver(s) 102") provided corresponding to the antennas 91-1 to 91-N, and an inter-base station communication unit 103. The TDD transceiver 102 has a duplexer 92, a RF transmitter 93, and a RF receiver 94. The small base station 20 also has a transmission processor 96, an interference measurement unit 98, a controller 99, a control signal generator 101, and a multiplexer (MUX) 95.

The small base station 20 receives a control signal via the inter-base station communication unit 103 when the macro base station 10 has determined to unload the traffic of the user equipment 30 to the small base station 20 or when the traffic is to be returned to the macro base station 10.

When the traffic is unloaded from the macro base station 10, the small base station 20 transmits and receives the unloaded data to and from the user equipment 30. During the communication, the interference measurement unit 78 may measure the interference level.

Time sharing resource allocation for the TDD communication between the small base station 20 and the user equipment 30 within the FDD uplink frequency resources may be instructed by a control signal from the macro base station 10. Alternatively, the controller 99 of the small base station 20 may determine the TDD resource allocation based upon the buffer status report from the user equipment 30.

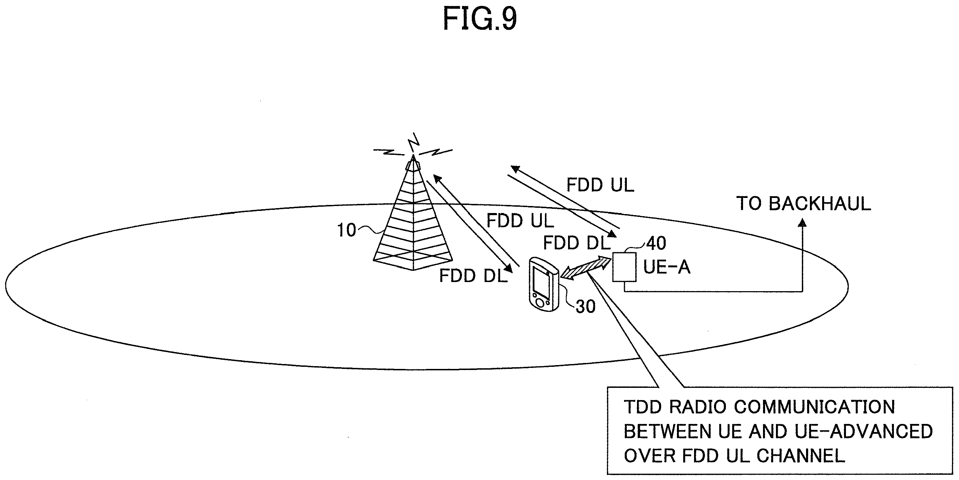

FIG. 9 illustrates a modification of TDD communication using the FDD uplink frequency spectrum of a macro cell, applied to TDD communication between user equipment 30 and an advanced UE (UE-A) 40. Communication between the user equipment 30 and the advanced UE 40 is carried out directly without a base station apparatus, and it is called device-to-device (D2D) communication.

The D2D communication illustrated in FIG. 9 may coexist with the TDD communication between the small base station 20 and the user equipment 30 illustrated in FIG. 1. A small base station has a similar aspect to an advanced UE from the viewpoint of size, transmit power, place of installation, etc. The D2D link can be regarded as being equivalent to the TDD link between the small cell and user equipment.

The macro base station 10 may release the link between the user equipment 30 and the small base station 20 of FIG. 1 and reconfigure a link between the user equipment 30 and the advanced UE 40 depending on the conditions in the small cell, the moving state of the user equipment 30, the buffer status, and so on. Both D2D communication and communication between the user equipment 30 and the small base station 20 are conducted by a TDD scheme. Accordingly, resource allocation to the D2D communication can be realized by the same procedure using the FDD uplink frequency spectrum.

In this manner, a TDD small cell (small base station 20) is introduced such that user traffic is unloaded to the small base station 20 and TDD communication between the small base station 20 and the user equipment 30 is performed using a FDD uplink frequency spectrum of the macro cell (macro base station 10). With this arrangement, efficient use of uplink resources is achieved.

By employing dynamically variable TDD for communication between the small base station 20 and the user equipment 30, the resource ratio between uplink and downlink can be varied flexibly and the efficiency of resource source is further improved.

## Claims

1. User equipment used in a mobile communication system that includes a first radio base station, a second radio base station, the user equipment comprising:
a first communication device configured to conduct frequency division duplexing, FDD, communication with the first radio base station; and
a second communication device configured to conduct time division duplexing, TDD, communication with the second radio base station,
wherein the TDD communication between the user equipment and the second radio base station is conducted using an uplink frequency spectrum of the FDD communication,
the first communication device is configured to receive a control signal used for communication with the second radio base station from the first radio base station, and
the second communication device is configured to establish, reconfigure, or release a radio resource between the user equipment and the second radio base station based upon the control signal,
wherein the second communication device is configured to communicate with the second radio base station using a first carrier frequency that overlaps with a carrier frequency used by the first radio base station for uplink FDD communication, or wherein the second communication device is configured to communicate with the second radio base station using a second carrier frequency that does not overlap with a carrier frequency used by the first radio base station for uplink FDD communication based upon the control signal in response to an interference measurement result.

2. A first radio base station used in a mobile communication system that includes the first radio base station, a second radio base station, and a user equipment, the first radio base station comprising:
a third communication device configured to conduct frequency division duplexing, FDD, communication with the user equipment;
a fourth communication device configured to communicate with the second radio base station; and a controller,
wherein the controller is configured to control establishment, reconfiguration, or release of time division duplexing, TDD, communication between the user equipment and the second radio base station and allocate an uplink frequency spectrum of the FDD communication to the TDD communication between the user equipment and the second radio base station,
wherein the third communication device is configured to transmit a first control signal to the user equipment, the first control signal being used for the TDD communication between the user equipment and the second radio base station,
wherein the fourth communication device is configured to transmit a second control signal to the second radio base station, the second control signal being used for the TDD communication between the second radio base station and the user equipment, and
wherein establishment, reconfiguration or release of the TDD communication between the user equipment and the second radio base station is performed based upon the first control signal and the second control signal,
wherein when the user equipment is to be connected to the second radio base station, the controller is configured to allocate a first carrier frequency that overlaps with a carrier frequency used by the first radio base station for uplink FDD communication to the second radio base station, or the controller is configured to allocate a second carrier frequency that does not overlap with a carrier frequency used by the first radio base station for uplink FDD communication to the second radio base station in response to an interference measurement result.

3. The first radio base station according to claim 2,
wherein the third communication device is configured to receive a buffer status report from the user equipment during communication between the user equipment and the second radio base station, and reconfigure or release the communication between the user equipment and the second radio base station based upon the buffer status information.

4. A second radio base station used in a mobile communication system that includes a first radio base station, the second radio base station, and a user equipment, in which system frequency division duplexing, FDD, communication is conducted between the user equipment and the first radio base station, the second radio base station comprising:
a fifth communication device configured to conduct time division duplexing, TDD, communication with the user equipment; and
a sixth communication device configured to communicate with the first radio base station,
wherein the fifth communication device is configured to conduct the TDD communication with the user equipment using an uplink frequency spectrum of the FDD communication,
wherein the sixth communication device is configured to receive a control signal to be used for the communication with the user equipment from the first radio base station, and
wherein the first communication device is configured to establish, reconfigure, or release the communication with the user equipment,
wherein the fifth communication device is configured to communicate with the user equipment using a first carrier frequency that overlaps with a carrier frequency used by the first radio base station for uplink FDD communication, based upon the control signal, or wherein the fifth communication device is configured to communicate with the user equipment using a second carrier frequency that does not overlap with a carrier frequency used by the first radio base station for uplink FDD communication, based upon the control signal in response to an interference measurement result.

## Patentansprüche

1. Anwenderendgerät, verwendet in einem Mobilkommunikationssystem, das eine erste Funkbasisstation, eine zweite Funkbasisstation enthält, wobei das Anwenderendgerät Folgendes umfasst:
eine erste Kommunikationsvorrichtung, die konfiguriert ist, Frequenzduplexkommunikation (FDD-Kommunikation) mit der ersten Funkbasisstation durchzuführen; und
eine zweite Kommunikationsvorrichtung, die konfiguriert ist, das Zeitduplexkommunikation (TDD-Kommunikation) mit der zweiten Funkbasisstation durchzuführen,
wobei die TDD-Kommunikation zwischen dem Anwenderendgerät und der zweiten Funkbasisstation unter Verwendung eines Uplink-Frequenzspektrums der FDD-Kommunikation durchgeführt wird,
die erste Kommunikationsvorrichtung konfiguriert ist, von der ersten Funkbasisstation ein Steuersignal zu empfangen, das zur Kommunikation mit der zweiten Funkbasisstation verwendet wird, und
die zweite Kommunikationsvorrichtung konfiguriert ist, basierend auf dem Steuersignal eine Funkressource zwischen dem Anwenderendgerät und der zweiten Funkbasisstation aufzubauen, zu rekonfigurieren oder aufzulösen,
wobei die zweite Kommunikationsvorrichtung konfiguriert ist, mit der zweiten Funkbasisstation unter Verwendung einer ersten Trägerfrequenz zu kommunizieren, die sich mit einer Trägerfrequenz überschneidet, die von der ersten Funkbasisstation für die Uplink-FDD-Kommunikation verwendet wird, oder
wobei die zweite Kommunikationsvorrichtung konfiguriert ist, basierend auf dem Steuersignal als Reaktion auf ein Interferenzmessergebnis mit der zweiten Funkbasisstation unter Verwendung einer zweiten Trägerfrequenz zu kommunizieren, die sich nicht mit einer Trägerfrequenz überschneidet, die von der ersten Funkbasisstation für die Uplink-FDD-Kommunikation verwendet wird.

2. Erste Funkbasisstation, verwendet in einem Mobilkommunikationssystem, das die erste Funkbasisstation, eine zweite Funkbasisstation und ein Anwenderendgerät enthält, wobei die erste Funkbasisstation Folgendes umfasst:
eine dritte Kommunikationsvorrichtung, die konfiguriert ist, Frequenzduplexkommunikation (FDD-Kommunikation) mit dem Anwenderendgerät durchzuführen;
eine vierte Kommunikationsvorrichtung, die konfiguriert ist, mit der zweiten Funkbasisstation zu kommunizieren; und eine Steuerung,
wobei die Steuerung konfiguriert ist, den Aufbau, die Rekonfiguration oder die Auflösung der Zeitduplexkommunikation (TDD-Kommunikation) zwischen dem Anwenderendgerät und der zweiten Funkbasisstation zu steuern und der TDD-Kommunikation zwischen dem Anwenderendgerät und der zweiten Funkbasisstation ein Uplink-Frequenzspektrum der FDD-Kommunikation zuzuordnen,
wobei die dritte Kommunikationsvorrichtung konfiguriert ist, ein erstes Steuersignal an das Anwenderendgerät zu übertragen, wobei das erste Steuersignal für die TDD-Kommunikation zwischen dem Anwenderendgerät und der zweiten Funkbasisstation verwendet wird,
wobei die vierte Kommunikationsvorrichtung konfiguriert ist, ein zweites Steuersignal an die zweite Funkbasisstation zu übertragen, wobei das zweite Steuersignal für die TDD-Kommunikation zwischen der zweiten Funkbasisstation dem Anwenderendgerät verwendet wird, und
wobei der Aufbau, die Rekonfiguration oder die Auflösung der TDD-Kommunikation zwischen dem Anwenderendgerät und der zweiten Funkbasisstation basierend auf dem ersten Steuersignal und dem zweiten Steuersignal durchgeführt wird,
wobei, wenn das Anwenderendgerät mit der zweiten Funkbasisstation verbunden werden soll, die Steuerung konfiguriert ist, der zweiten Funkbasisstation eine erste Trägerfrequenz zuzuordnen, die sich mit einer Trägerfrequenz überschneidet, die von der ersten Funkbasisstation für die Uplink-FDD-Kommunikation verwendet wird, oder
die Steuerung konfiguriert ist, der zweiten Funkbasisstation als Reaktion auf ein Interferenzmessergebnis eine zweite Trägerfrequenz zuzuordnen, die sich nicht mit einer Trägerfrequenz überschneidet, die von der ersten Funkbasisstation für die Uplink-FDD-Kommunikation verwendet wird.

3. Erste Funkbasisstation nach Anspruch 2,
wobei die dritte Kommunikationsvorrichtung konfiguriert ist, während der Kommunikation zwischen dem Anwenderendgerät und der zweiten Funkbasisstation einen Zwischenspeicherstatusbericht von dem Anwenderendgerät zu empfangen und basierend auf den Zwischenspeicherstatusinformationen die Kommunikation zwischen dem Anwenderendgerät und der zweiten Funkbasisstation zu rekonfigurieren oder aufzulösen.

4. Zweite Funkbasisstation, verwendet in einem Mobilkommunikationssystem, das eine erste Funkbasisstation, die zweite Funkbasisstation und ein Anwenderendgerät enthält, wobei in diesem System Frequenzduplexkommunikation (FDD-Kommunikation) zwischen dem Anwenderendgerät und der ersten Funkbasisstation durchgeführt wird, wobei die zweite Funkbasisstation Folgendes umfasst:
eine fünfte Kommunikationsvorrichtung, die konfiguriert ist, Zeitduplexkommunikation (TDD-Kommunikation) mit dem Anwenderendgerät durchzuführen; und
eine sechste Kommunikationsvorrichtung, die konfiguriert ist, mit der ersten Funkbasisstation zu kommunizieren,
wobei die fünfte Kommunikationsvorrichtung konfiguriert ist, die TDD-Kommunikation mit dem Anwenderendgerät unter Verwendung eines Uplink-Frequenzspektrums der FDD-Kommunikation durchzuführen,
wobei die sechste Kommunikationsvorrichtung konfiguriert ist, von der ersten Funkbasisstation ein Steuersignal zu empfangen, das zur Kommunikation mit dem Anwendergerät verwendet werden soll, und
wobei die erste Kommunikationsvorrichtung konfiguriert ist, die Kommunikation mit dem Anwenderendgerät aufzubauen, zu rekonfigurieren oder aufzulösen,
wobei die fünfte Kommunikationsvorrichtung konfiguriert ist, basierend auf dem Steuersignal mit dem Anwendergerät unter Verwendung einer ersten Trägerfrequenz zu kommunizieren, die sich mit einer Trägerfrequenz überschneidet, die von der ersten Funkbasisstation für die Uplink-FDD-Kommunikation verwendet wird, oder
wobei die fünfte Kommunikationsvorrichtung konfiguriert ist, basierend auf dem Steuersignal als Reaktion auf ein Interferenzmessergebnis mit dem Anwendergerät unter Verwendung einer zweiten Trägerfrequenz zu kommunizieren, die sich nicht mit einer Trägerfrequenz überschneidet, die von der ersten Funkbasisstation für die Uplink-FDD-Kommunikation verwendet wird.

## Revendications

1. Équipement utilisateur utilisé dans un système de communication mobile qui inclut une première station de base radio, une seconde station de base radio, l'équipement utilisateur comprenant :
un premier dispositif de communication configuré pour mener une communication FDD (communication duplex par répartition en fréquence) avec la première station de base radio ; et
un deuxième dispositif de communication configuré pour mener une communication TDD (communication duplex par répartition dans le temps) avec la seconde station de base radio,
dans lequel la communication TDD entre l'équipement utilisateur et la seconde station de base radio est menée à l'aide d'un spectre de fréquences en liaison montante de la communication FDD,
le premier dispositif de communication est configuré pour recevoir un signal de commande utilisé pour une communication avec la seconde station de base radio à partir de la première station de base radio, et
le deuxième dispositif de communication est configuré pour établir, reconfigurer ou libérer une ressource radio entre l'équipement utilisateur et la seconde station de base radio sur la base du signal de commande,
dans lequel le deuxième dispositif de communication est configuré pour communiquer avec la seconde station de base radio à l'aide d'une première fréquence de porteuse qui coïncide avec une fréquence de porteuse utilisée par la première station de base radio pour des communications FDD en liaison montante, ou
dans lequel le deuxième dispositif de communication est configuré pour communiquer avec la seconde station de base radio à l'aide d'une seconde fréquence de porteuse qui ne coïncide pas avec une fréquence de porteuse utilisée par la première station de base radio pour des communications FDD en liaison montante sur la base du signal de commande en réponse à un résultat de mesure d'interférences.

2. Première station de base radio utilisée dans un système de communication mobile qui inclut la première station de base radio, une seconde station de base radio et un équipement utilisateur, la première station de base radio comprenant :
un troisième dispositif de communication configuré pour mener une communication FDD (communication duplex par répartition en fréquence) avec l'équipement utilisateur ;
un quatrième dispositif de communication configuré pour communiquer avec la seconde station de base radio ; et une commande,
dans lequel la commande est configurée pour commander l'établissement, la reconfiguration ou la libération d'une communication TDD (communication duplex par répartition dans le temps) entre l'équipement utilisateur et la seconde station de base radio et allouer un spectre de fréquences en liaison montante de la communication FDD à la communication TDD entre l'équipement utilisateur et la seconde station de base radio,
dans lequel le troisième dispositif de communication est configuré pour transmettre un premier signal de commande à l'équipement utilisateur, le premier signal de commande étant utilisé pour la communication TDD entre l'équipement utilisateur et la seconde station de base radio,
dans lequel le quatrième dispositif de communication est configuré pour transmettre un second signal de commande à la seconde station de base radio, le second signal de commande étant utilisé pour la communication TDD entre la seconde station de base radio et l'équipement utilisateur, et
dans lequel l'établissement, la reconfiguration ou la libération de la communication TDD entre l'équipement utilisateur et la seconde station de base radio est réalisé sur la base du premier signal de commande et du second signal de commande,
dans lequel, lorsque l'équipement utilisateur doit être relié à la seconde station de base radio, la commande est configurée pour attribuer une première fréquence de porteuse qui coïncide avec une fréquence de porteuse utilisée par la première station de base radio pour des communications FDD en liaison montante vers la seconde station de base radio, ou la commande est configurée pour attribuer une seconde fréquence de porteuse qui ne coïncide pas avec une fréquence de porteuse utilisée par la première station de base radio pour des communications FDD en liaison montante vers la seconde station de base radio en réponse à un résultat de mesure d'interférences.

3. Première station de base radio selon la revendication 2,
dans lequel le troisième dispositif de communication est configuré pour recevoir un rapport d'état de mémoire tampon depuis l'équipement utilisateur durant une communication entre l'équipement utilisateur et la seconde station de base radio, et reconfigurer ou libérer la communication entre l'équipement utilisateur et la seconde station de base radio sur la base des informations d'état de mémoire tampon.

4. Seconde station de base radio utilisée dans un système de communication mobile qui inclut une première station de base radio, la seconde station de base radio et un équipement utilisateur, dans laquelle une communication FDD (communication duplex par répartition en fréquence) est menée entre l'équipement utilisateur et la première station de base radio, la seconde station de base radio comprenant :
un cinquième dispositif de communication configuré pour mener une communication TDD (communication duplex par répartition dans le temps) avec l'équipement utilisateur ; et
un sixième dispositif de communication configuré pour communiquer avec la première station de base radio,
dans lequel le cinquième dispositif de communication est configuré pour mener la communication TDD avec l'équipement utilisateur à l'aide d'un spectre de fréquences en liaison montante de la communication FDD,
dans lequel le sixième dispositif de communication est configuré pour recevoir un signal de commande à utiliser pour la communication avec l'équipement utilisateur en provenance de la première station de base radio, et
dans lequel le premier dispositif de communication est configuré pour établir, reconfigurer ou libérer la communication avec l'équipement utilisateur,
dans lequel le cinquième dispositif de communication est configuré pour communiquer avec l'équipement utilisateur à l'aide d'une première fréquence de porteuse qui chevauche une fréquence de porteuse utilisée par la première station de base radio pour des communications FDD en liaison montante, sur la base du signal de commande, ou
dans lequel le cinquième dispositif de communication est configuré pour communiquer avec l'équipement utilisateur à l'aide d'une seconde fréquence de porteuse qui ne chevauche pas une fréquence de porteuse utilisée par la première station de base radio pour des communications FDD en liaison montante, sur la base du signal de commande en réponse à un résultat de mesure d'interférences.
